# EUROPEAN PATENT APPLICATION

(11) **EP 2 618 610 A2**
(43) Date of publication of application: **24.07.2013**
(21) Application number: 11825408.5
(22) Date of filing: 14.09.2011
(51) Int. Cl.: H04W 36/26, H04B 7/26, H04L 27/26

(54) **EFFICIENT HANDOVER/SCANNING TRIGGER METHOD IN A BROADBAND WIRELESS ACCESS SYSTEM SUPPORTING A MULTICARRIER**

(30) Priority: 14.09.2010 US 382887 P
(71) Applicant: LG Electronics Inc., Yeongdeungpo-gu Seoul 150-721 (KR)
(72) Inventor: JUNG, Inuk, Anyang-si Gyeonggi-do 431-080 (KR); RYU, Kiseon, Anyang-si Gyeonggi-do 431-080 (KR); KWAK, Jinsam, Anyang-si Gyeonggi-do 431-080 (KR); LEE, Wookbong, Anyang-si Gyeonggi-do 431-080 (KR)
(74) Representative: Urner, Peter
(86) International application number: PCT/KR2011/006760
(87) International publication number: WO 2012/036448

(57) **Abstract**

The present invention relates to a broadband wireless access system, and more particularly, to a method of preventing a terminal from performing an unnecessary operation in a multicarrier environment, and a device for performing the method. An operating method of a terminal operating as a carrier aggregation mode in a broadband wireless access system supporting a multi carrier according to an embodiment of the present invention includes: obtaining system information on a neighbor base station and trigger function information applied to a carrier aggregation mode through a first broadcast message broadcasted from a serving base station; scanning a channel state for at least one carrier of a neighbor base station supporting a multicarrier by using the obtained system information; and transmitting a second message to the serving base station if the scanning result satisfies a condition based on the trigger function information.

## Description

### TECHNICAL FIELD

The present invention relates to a broadband wireless access system, and more particularly, to a method for preventing a mobile station from performing an unnecessary operation in a multicarrier environment and apparatus therefor.

### BACKGROUND ART

In the following description, carriers are schematically explained.

First of all, a user is able to provide information to transmit by modulating and manipulating an amplitude, frequency and/or phase of a sinusoidal wave or a periodic pulse wave. In this case, the sinusoidal or periodic pulse wave playing a role in carrying the information is called a carrier.

Carrier modulation schemes may be classified into a single-carrier modulation (SCM) scheme and a multicarrier modulation (MCM) scheme. In particular, the single-carrier modulation (SCM) scheme is a modulation scheme of having all information carried on a single carrier.

According to the multicarrier modulation (MCM) scheme, a whole bandwidth channel of a single carrier is divided into a plurality of subchannels having small bandwidths and a plurality of narrowband subcarriers are transmitted on the subchannels by multiplexing.

In doing so, if the multicarrier modulation (MCM) scheme is used, a plurality of the subchannels may be approximated to a flat channel owing to their small bandwidths. And, a user may be able to compensate for channel distortion using a simple equalizer. Moreover, the multicarrier modulation (MCM) scheme enables fast implementation using Fast Fourier Transform (FFT). In particular, the multicarrier modulation (MCM) scheme is superior to the single-carrier modulation (SCM) scheme in aspect of fast data transmission.

As the performance of a base station and/or a mobile station is being increasingly enhanced, a frequency bandwidth providable or available for the base station and/or the mobile station is extending increasingly. Hence, according to embodiments of the present invention, a multicarrier system supportive of a broadband in a manner of aggregating at least one or more carriers together is disclosed.

In particular, a multicarrier system mentioned in the following description corresponds to a case of aggregating at least one or more carriers to use, which is different from the multicarrier modulation (MCM) scheme of viding a single carrier to use.

In order to efficiently use multi-band or multicarrier, a scheme for a single medium access control (MAC) entity to manage several carriers (e.g., several frequency carriers (FCs)) has been proposed.

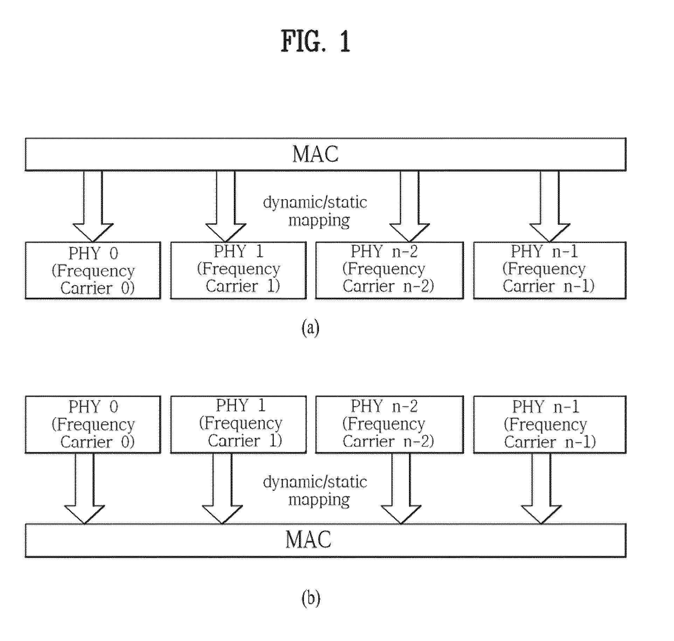

FIG. 1 (a) and FIG. 1 (b) are diagrams to describe a multi-band radio frequency (RF) based signal transceiving method.

Referring to FIG. 1, a medium access control (MAC) layer in a transmitting/receiving side may be able to manage a plurality of carriers to efficiently use multiple carriers. In doing so, in order to effectively transceive multiple carriers, assume that both of the transmitting side and the receiving side are capable of transceiving the multiple carriers. In this case, since it is unnecessary for frequency carriers (FCs) managed by the MAC layer to be contiguous with each other, it is flexible in aspect of resource management. In particular, both contiguous carrier aggregation and non-contiguous carrier aggregation are possible.

Referring to FIG. 1 (a) and FIG. 1 (b), physical layers PHY 0 to PHY n-1 indicate multiple bands of the present invention, respectively. Each of the multiple bands may have a frequency carrier (FC) size assigned to a specific service by a previously determined frequency policy. For instance, PHY 0 (RF carrier 0) may have a size of a frequency band assigned for a normal FM radio broadcast and PHY 1 (RF carrier 1) may have a size of a frequency band assigned for a mobile phone communication.

Thus, the respective frequency bands may differ from each other in frequency band size in accordance with frequency band properties, respectively. For clarity, in the following description, assume that each frequency carrier (FC) has a size of A MHz. And, each of the frequency assignment brands may be represented as a carrier frequency to use a baseband signal on a corresponding frequency band. In the following description, each frequency assignment band shall be named a carrier frequency band. If here is no confusion, each carrier frequency band shall be simply named a carrier. Moreover, as recently defined in 3GPP LTE-A, the above-mentioned carrier may be called a component carrier to be discriminated from a subcarrier used by a multicarrier system.

In this aspect, the multi-band scheme may be called a multicarrier scheme or a carrier aggregation scheme.

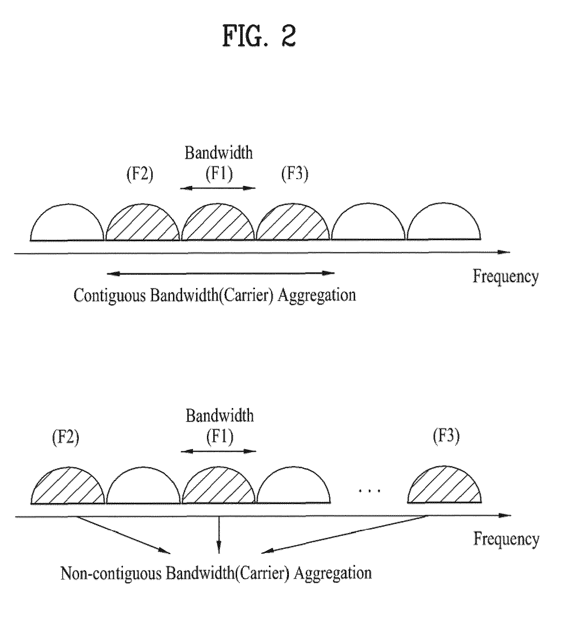

FIG. 2 a diagram for one example of illustrating how multiple carriers are used in a general wireless communication system.

Referring to FIG. 2, a multicarrier in a general technology may include contiguous carrier aggregation [FIG. 2 (a)] or non-contiguous carrier aggregation [FIG. 2 (b)]. In this case, a unit of the carrier aggregation is a basic bandwidth unit of a general legacy system (e.g., LTE in case of LTE-A (long term evolution-advanced) system, IEEE 802.16e in case of IEEE 802.16m system). In a multicarrier configuration of a general technology, carriers of two types are defined as follows.

First of all, a 1^{st} carrier (or, a primary carrier) means a carrier means a carrier for exchanging traffics and full PHY/MAC control informations between a mobile station and a base station. And, the primary carrier may be usable for such a general operation of a mobile station as a network entry and the like. Moreover, each mobile station has one primary carrier in one cell.

Secondly, a 2^{nd} carrier (or, a secondary carrier) generally means a supplementary carrier usable for an exchange of traffics in accordance with a UE-specific assignment command and rule received on the 1^{st} carrier. The 2^{nd} carrier may include control signaling to support a multicarrier operation. Generally, all control informations and information on a secondary information are received via a primary carrier and data is transmitted and received on the secondary carrier.

General technology may be able to categorize carriers of a multicarrier system into a fully configured carrier and a partially configured carrier based on the above-described primary and secondary carriers.

First of all, the fully configured carrier may indicate the carrier for configuring all control signals including synchronization, broadcast, multicast and unicast control channels. Moreover, informations and parameters for carriers different from those of the multicarrier operation may be included in the control channels.

Secondly, the partially configured carrier may mean the carrier for configuring all control channels to support a DL transmission in a DL carrier having no UL carrier to pair in a TDD (time division duplex) DL transmission or FDD (frequency division duplex) mode. A secondary carrier, which is a fully configured carrier configured in a prescribed mobile station may be allocated as a primary carrier of another mobile station.

Generally, a mobile station performs an initial network entry via a primary carrier and may be able to exchange information on mutual multicarrier capability in a registration procedure via registration request/response (AAI_REG-REQ/RSP) exchange with a base station.

As mentioned in the foregoing description, a handover (HO) can be performed through multiple carriers in a system in which both a mobile station and a base station support multiple carriers. The handover means that a mobile station moves away from a radio interface of one base station into a radio interface of another base station. In a general handover, a radio interface is changed from one base station into another base station via a single carrier. On the other hand, in a handover in a multi-carrier environment, a radio interface is changed in a manner of performing a reentry into a network of a target base station via a primary carrier and then activating a secondary carrier.

Yet, the number of carriers or carrier configuration information (i.e., frequency assignment, bandwidth, etc.) may differ per base station belonging to a network. And, carriers of the same base station may differ from each other in configuration information, thereby possibly differing in coverage as well. Hence, although a mobile station scans carriers of a specific base station (e.g., a serving base station), a scanning result value may be different per carrier. In particular, although a plurality of carriers corresponding to the same base station are scanned at the same location, if carriers differ from each other in configuration, it is not preferable that a general trigger condition is uniformly applied to all of the carriers.

If the uniform application is performed, a mobile station may experience a phenomenon of exchanging medium access control (MAC) messages with a serving base station due to an unnecessary scanning/handover trigger, whereby power consumption or an erroneous operation procedure may be caused.

For instance, while a mobile station is communicating with a serving base station using 3 active carriers, as a channel state of one of the carriers is degraded, assume a case that a scanning trigger condition is met. In doing so, if a trigger condition is uniformly applied, the mobile station unnecessarily sends a scan report (AAI-SCN-REP) message to the base station despite that channel states of the rest of the active carriers (i.e., 2 remaining carriers) are good. In particular, the mobile station sends the scan report message due to the channel state problem of the former carrier despite that a handover is not necessary yet.

Similarly, in a situation of a carrier aggregation ode (hereinafter named a CA mode) in which one mobile station uses a plurality of carriers together, if the number of carriers desired by a neighbor base station different from that of active carriers in CA mode, it may cause a problem of a trigger condition that the mobile station sends a scan report message to the base station.

### DISCLOSURE OF THE INVENTION

### TECHNICAL TASK

Accordingly, the present invention is directed to substantially obviate one or more problems due to limitations and disadvantages of the related art. First of all, one object of the present invention is to provide a method of performing a multi-carrier operation more efficiently.

Another object of the present invention is to define a new trigger function for a multicarrier environment.

A further object of the present invention is to provide a condition in accordance with a trigger function available for efficient management of multicarrier resources and method of obtaining/determining the same.

Technical tasks obtainable from the present invention are non-limited the above-mentioned technical task. And, other unmentioned technical tasks can be clearly understood from the following description by those having ordinary skill in the technical field to which the present invention pertains.

### TECHNICAL SOLUTION

To achieve these and other advantages and in accordance with the purpose of the present invention, as embodied and broadly described, an operating method of a mobile station, which operates in a carrier aggregation mode in a multicarrier supportive broadband wireless access system, according to one embodiment of the present invention may include the steps of obtaining a system information of a neighbor base station and a trigger function information applied to the carrier aggregation mode via a 1^{st} broadcast message broadcasted by a serving base station, scanning a channel state for at least one carrier of the neighbor base station supportive of multiple carriers using the obtained system information, and sending a 2^{nd} message to the serving base station if a result of the scanning step meets a condition in accordance with the trigger function information.

Preferably, the condition in accordance with the trigger function information is met if the number of carriers, each having a channel state equal to or greater than a predetermined value, among the scanned at least one carrier is equal to or greater than N.

More preferably, the N value may be included in the 1^{st} broadcast message for each of the at least one neighbor base station or a 3^{rd} message including a multicarrier information of the serving base station.

More preferably, the N value may include the number of currently active carriers of the mobile station.

More preferably, the 2^{nd} message may include a scan report (AAI-SCN-RSP) message and a handover request (AAI-HO-REQ) message.

To further achieve these and other advantages and in accordance with the purpose of the present invention, a method of supporting a mobile station, which operates in a carrier aggregation mode and is supported by a serving station supportive of multiple carriers in a multicarrier supportive broadband wireless access system, according to one embodiment of the present invention may include the steps of broadcasting a 1^{st} broadcast message including a system information of at least one neighbor base station and a trigger function information applied to the carrier aggregation mode and receiving a 2^{nd} message including a channel state information on a plurality of carriers supported by at least one of the at least one neighbor base station from the mobile station.

Preferably, the mobile station may perform a scan on a specific base station among the at least one neighbor base station. In this case, if the number of carriers having a channel state equal to or greater than a predetermined value among a plurality of carriers supported by the specific base station is equal to or greater than N, the mobile station may send the 2^{nd} message to the serving base station.

More preferably, the N value may be included in the 1^{st} broadcast message per the neighbor base station or a 3^{rd} message including a multicarrier information of the serving base station.

More preferably, the N value may include the number of currently active carriers of the mobile station.

More preferably, the 1^{st} broadcast message may include a neighbor advertisement (AAI-NBR-ADV) message and the 2^{nd} broadcast message may include a scan report (AAI-SCN-RSP) message.

To further achieve these and other advantages and in accordance with the purpose of the present invention, a mobile station, which operates in a carrier aggregation mode in a multicarrier supportive broadband wireless access system, according to another embodiment of the present invention may include a processor and a radio communication (RF) module configured to transceive radio signals externally under a control of the processor, wherein the processor obtains a system information of a neighbor base station and a trigger function information applied to the carrier aggregation mode via a 1^{st} broadcast message broadcasted by a serving base station, wherein the processor performs a scanning on a channel state for at least one carrier of the neighbor base station supportive of multiple carriers using the obtained system information, and wherein the processor controls a 2^{nd} message to be sent to the serving base station if a result of the scanning meets a condition in accordance with the trigger function information.

Preferably, the processor may determine that the condition in accordance with the trigger function information is met if the number of carriers, each having a channel state equal to or greater than a predetermined value, among the scanned at least one carrier is equal to or greater than N.

More preferably, the N value may be included in the 1^{st} broadcast message for each of the at least one neighbor base station or a 3^{rd} message including a multicarrier information of the serving base station.

More preferably, the N value may include the number of currently active carriers of the mobile station.

More preferably, the 2^{nd} message may include a scan report (AAI-SCN-RSP) message and a handover request (AAI-HO-REQ) message.

### ADVANTAGEOUS EFFECTS

Accordingly, the present invention may provide the following effects and/or features.

First of all, using embodiments of the present invention, a multicarrier operation can be performed between a mobile station and a base station more efficiently.

Secondly, according to embodiments of the present invention, a mobile station defines a new trigger function for a multicarrier environment.

Thirdly, a mobile station determines a condition information of a trigger function for a multicarrier environment as the number of its active carriers or obtains the condition information through a broadcast message and then takes an action in accordance with the corresponding function only. Therefore, the present invention prevents radio resources from being unnecessarily wasted.

Effects obtainable from the present invention may be non-limited by the above mentioned effect. And, other unmentioned effects can be clearly understood from the following description by those having ordinary skill in the technical field to which the present invention pertains.

### DESCRIPTION OF DRAWINGS

FIG. 1 (a) and FIG. 1 (b) are diagrams to describe a multi-band radio frequency (RF) based signal transceiving method.

FIG. 2 a diagram for one example of illustrating how multiple carriers are used in a general wireless communication system.

FIG. 3 is a diagram for one example of a procedure for a base station to assign at least one carrier to a mobile station in a broadband wireless access system to which the present invention is applied.

FIG. 4 is a diagram for one example of a trigger procedure for a scan report message in a multicarrier environment according to one embodiment of the present invention.

FIG. 5 is a block diagram for one example of structures of transmitting and receiving sides according to another embodiment of the present invention.

### MODE FOR INVENTION

The present invention relates to a wireless access system. The following embodiments of the present invention define a condition for a mobile station to send a scan report message and/or to trigger a handover efficiently in a multicarrier environment.

First of all, the following embodiments correspond to combinations of elements and features of the present invention in prescribed forms. And, it is able to consider that the respective elements or features are selective unless they are explicitly mentioned. Each of the elements or features can be implemented in a form failing to be combined with other elements or features. Moreover, it is able to implement an embodiment of the present invention by combining elements and/or features together in part. A sequence of operations explained for each embodiment of the present invention can be modified. Some configurations or features of one embodiment can be included in another embodiment or can be substituted for corresponding configurations or features of another embodiment.

In the description of drawings, procedures or steps, which may ruin the substance of the present invention, are not explained. And, procedures or steps, which can be understood by those skilled in the art, are not explained as well.

In this specification, embodiments of the present invention are described centering on the data transmission/reception relations between a base station and a terminal. In this case, the base station is meaningful as a terminal node of a network which directly performs communication with the terminal. In this disclosure, a specific operation explained as performed by a base station can be occasionally performed by an upper node of the base station.

In particular, in a network constructed with a plurality of network nodes including a base station, it is apparent that various operations performed for communication with a terminal can be performed by a base station or other networks except the base station. In this case, 'base station' can be replaced by such a terminology as a fixed station, a Node B, an eNode B (eNB), an advanced base station (ABS), an access point, an advanced base station (ABS) and the like. And, 'mobile station (MS)' can be replaced by such a terminology as a user equipment (UE), a subscriber station (SS), a mobile subscriber station (MSS), an advanced mobile station (AMS), a mobile terminal and the like.

Moreover, a transmitting side means a node that transmits a data service or a speech service. And, a receiving side means a node that receives a data service or a speech service. Hence, a mobile station can become a transmitting side and a base station can become a receiving side, in uplink. Likewise, a mobile station becomes a receiving side and a base station becomes a transmitting side, in downlink.

Meanwhile, a mobile terminal of the present invention may include one of a PDA (personal digital assistant (PDA), a cellular phone, a PCS (personal communication service) phone, a GSM (global system for mobile) phone, a WCDMA (wideband CDMA) phone, an MBS (mobile broadband system) phone and the like.

Embodiments of the present invention can be implemented using various means. For instance, embodiments of the present invention can be implemented using hardware, firmware, software and/or any combinations thereof.

In case of the implementation by hardware, a method according to each embodiment of the present invention can be implemented by at least one selected from the group consisting of ASICs (application specific integrated circuits), DSPs (digital signal processors), DSPDs (digital signal processing devices), PLDs (programmable logic devices), FPGAs (field programmable gate arrays), processor, controller, microcontroller, microprocessor and the like.

In case of the implementation by firmware or software, a method according to each embodiment of the present invention can be implemented by modules, procedures, and/or functions for performing the above-explained functions or operations. Software code is stored in a memory unit and is then drivable by a processor. The memory unit is provided within or outside the processor to exchange data with the processor through the means well-known to the public.

Embodiments of the present invention are supportable by standard documents disclosed in at least one of wireless access systems including IEEE 802 system, 3GPP system, 3GPP LTE system and 3GPP2 system. In particular, the steps or parts, which are not explained to clearly reveal the technical idea of the present invention, in the embodiments of the present invention can be supported by the above documents. In particular, embodiments of the present invention may be supported by at least one of P802.16-2004, P802.16e-2005, P802.16Rev2 and P802.16m documents which are the standards of IEEE 802.16 system.

In the following description, specific terminologies used for embodiments of the present invention are provided to help the understanding of the present invention. And, the use of the specific terminology can be modified into another form within the scope of the technical idea of the present invention.

The present specification is described on the assumption of IEEE 802.16 system. In particular, a mobile station mentioned in the following description may be assumed as an AMS (advanced mobile station) that satisfies the standards defined by IEEE 802.16m. And, a base station is assumed as an ABS (advanced base station) that satisfies the same standards.

Terminologies usable for a multicarrier operation are defined as follows.

1. Available carriers mean all carriers belonging to a base station (e.g., ABS). A mobile station may be able to obtain information on the available carrier via a global carrier configuration (AAI_Global-config) message or a multicarrier advertisement (AAI_MC-ADV) message.

2. Assigned carriers mean a subset of available carriers assigned to a mobile station by a base station in accordance with capability of the mobile station. In particular, in consideration of the capability of the mobile station, the base station may be able to assign at least one of its available carriers as an assigned secondary carrier of the mobile station.

3. Active carrier means a carrier ready to actually exchange data between a mobile station and a base station and may include a subset of assigned carriers. Activation or deactivation of the assigned secondary carrier may be determined by a determination of the base station based on a QoS (quality of service) request. The base station may be able to inform the mobile station of a presence or non-presence of activation/deactivation of a specific secondary carrier via a carrier management command (AAI_CM-CMD) message.

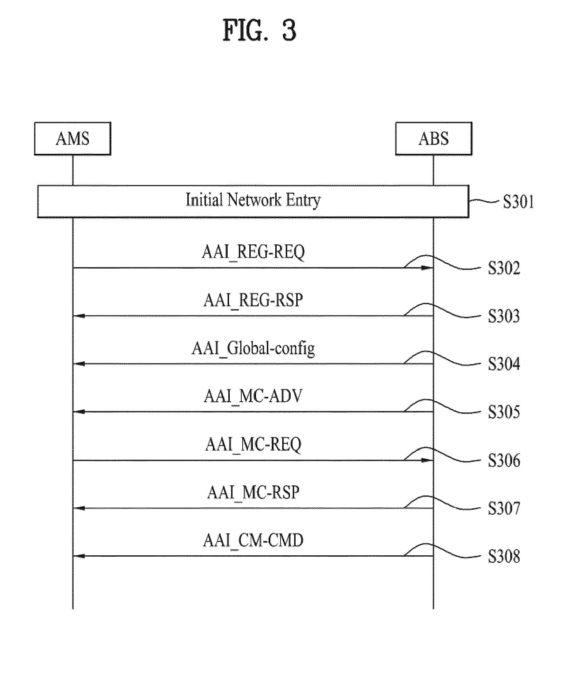

Based on the above-mentioned definitions, a procedure for a base station to assign a carrier to a mobile station is described with reference to FIG. 3 as follows.

FIG. 3 is a diagram for one example of a procedure for a base station to assign at least one carrier to a mobile station in a broadband wireless access system, to which the present invention is applied.

Referring to FIG. 3, a mobile station (AMS) performs an initial access procedure (e.g., an initial network entry) including a scanning step, a ranging step and the like on a base station (ABS) [S301].

The mobile station and the base station may be able to exchange information on mutual multicarrier capabilities via registration request/response (AAI_REG-REQ/RSP) messages [S302, S303].

Having sent the AAI-REG-RSP message to the mobile station, the base station may be able to send a global carrier configuration (AAI_Global-CFG) message [S304].

In this case, the global carrier configuration message may contain information on all available carriers supported by a network.

The mobile station receives a multicarrier advertisement (AAI_MC-ADV) message periodically broadcasted by the base station and may be then able to obtain the information on a multicarrier configuration of the base station [S305].

Subsequently, using the obtained information, the mobile station may be able to make a request for a list of assigned carrier to the base station in a manner of informing the base station of information on carriers (i.e., AMS's supportable carriers) supportable by the mobile station in accordance with the multicarrier configurations of the available carriers of the base station via a multicarrier request (AAI_MC-REQ) message [S306].

Based on the information received from the mobile station, the base station determines an assigned carrier list by determining a subset to assign secondary carriers of the mobile station in its available carriers and may be then able to inform the mobile station of the determined assigned carrier list via a multicarrier response (AAI_MC-RSP) message [S307].

Thereafter, the base station may be able to inform the mobile station of a presence or non-presence of activation/deactivation of the assigned carrier having been assigned to the mobile station in accordance with the determination on the basis of a QoS (quality of service) request in a manner of sending a carrier management command (AAI_CM-CMD) message to the mobile station [S308].

<**Trigger Condition**>

According to one embodiment of the present invention, a plurality of carriers are assigned to a mobile station by the process mentioned in the foregoing description with reference to FIG. 3 or a similar process, the mobile station sends a scan report message to a serving base station in a state that at least one portion of the carriers are active, and a condition for triggering a handover is proposed.

As mentioned in the foregoing description, a plurality of carriers may be assigned to a mobile station in a multicarrier environment. Therefore, the present embodiment proposes that a mobile station is informed to take an action of a specific operation (e.g., sending AAI-SCN-REP message, etc.) if a trigger condition for several carriers is met per base station. In particular, a trigger action, which is defined as a prescribed carrier meets the trigger condition, is not performed. Instead, it is proposed to perform a related trigger action only if all ofN carriers determined per base station meet the trigger condition. In this specification, such a trigger condition shall be named a base station (ABS) specific trigger condition and such a trigger shall be named a base station-specific multicarrier trigger (ABS-specific MC trigger).

This is because, when a carrier index 0 (i.e., an earliest index) is given to a carrier having a wide coverage in a neighbor base station, if one of early indexes meets a trigger condition, a mobile station may possibly send a scan report message to a serving base station or may possibly trigger a handover. If the handover is triggered under this condition, each channel state of carriers respectively corresponding to indexes 1 and 2, each of which has a coverage narrower than that of a carrier corresponding to a carrier index 0 of a neighbor base station at a current location of the mobile station, may be worse than that of the carrier corresponding to the carrier index 0. Hence, since the mobile station may trigger the handover into a previous serving base station, radio resources are unnecessarily wasted and a delay time may be generated.

In addition, according to another example of the present embodiment, it may be able to determine a trigger condition based on the number of active carriers of a mobile station. In particular, a base station does not explicitly inform the mobile station of N carriers as the trigger condition but the trigger condition may be determined using the number of currently active carriers. In this specification, such a trigger condition shall be named a mobile station (AMS) specific trigger condition and such a trigger shall be named a mobile station-specific multicarrier trigger (AMS-specific MC trigger).

First of all, in case that a base station specific trigger condition is applied, a serving base station may be able to inform mobile stations of the number N of base station specific carriers through a broadcast message.

In doing so, if the number N of the base station specific carriers is commonly applied to a neighbor base station, it may be included in a multicarrier advertisement message as Table 1.

Table 1 shows one example of a format for a multicarrier advertisement message containing carrier number information when a base station specific multicarrier trigger (ABS-specific MC trigger) according to one embodiment of the present invention is applied.

**[Table 1]**

| Field | Size (bits) | Description | Condition |
|---|---|---|---|
| Number of neighbor ABS's carriers for ABS-specific MC trigger | 1 | Indicates the threshold value for number of neighbor ABS's carriers if ABS-specific MC trigger is applied. | Present when ABS specific MC trigger is applied. |
| | | 0b0: N=2 | |
| | | 0b1: N=3 | |

In Table 1, a held is configured to perform a trigger action channel only if all of channel states for 2 or 3 neighbor base station carriers meet a preset reference. Of course, the number of bits indicating the carrier number N may modified into at least two or higher, thereby enabling more carriers to be indicated.

Meanwhile, if the carrier number N, which is the baser station specific trigger condition, is different per neighbor base station, information on the carrier number N may be contained in a neighbor advertisement (AAI-NBR-ADV) message as Table 2.

Table 2 shows one example of a format for a neighbor advertisement message containing carrier number information when a base station specific multicarrier trigger (ABS-specific MC trigger) according to one embodiment of the present invention is applied.

**[Table 2]**

| M/O | Attributes/Array of attributes | Size (bits) | Value/Note | Conditions |
|---|---|---|---|---|
| ... | ... | ... | ... | ... |
| | For (i=0; i<N-NBR-ABSs; i++){ | | N-NBR-ABSs is the number of neighbor ABSs included in this message, and has the range of [1..64]. | |
| O | Carrier_Number_N | 2 | The number of carriers to be used for satisfying the Neighbor-specific trigger regarding | May be included for each neighbor ABS with Multi-carrier capability. This is only applicable when trigger function 0x7 is set. |
| | | | Multi-carrier condition: | |
| | | | 0b00: N=2 | |
| | | | 0b01: N=3 | |
| | | | 0b10: N=4 | |
| | | | 0b 11: reserved | |
| ... | ... | ... | ... | ... |

Referring to Table 2, carrier number information (Carrier_Number_N) may be included in a neighbor advertisement message as 2-bit information for each neighbor base station.

The carrier number information, which corresponds to the case of applying the base station specific multicarrier trigger (ABS-specific MC trigger) exemplarily shown in Table 1 or Table 2, may be included in each broadcast message only if a base station supportive of multiple carriers exists nearby a serving base station or only if a specific trigger function (e.g., a trigger function 0x7 mentioned in the following description) is applied.

In Table 2, the trigger function 0x7 is the trigger function newly proposed by the present invention and means the trigger function applicable in a multicarrier environment. And, the trigger function 0x7 shall be explained in detail.

On the other hand, although a base station supportive of multiple carriers exists nearby a serving base station, if the carrier number information exemplarily shown in Table 1 or Table 2 is not signaled to a mobile station, a mobile station specific multicarrier trigger (AMS-specific MC trigger) may be applicable. In particular, if the carrier number information is not included in the AAI-NBR-ADV message or the AAI-MC-ADV message, the number of currently active carriers of the mobile station may become the trigger condition.

Meanwhile, in case that the carrier number is signaled as a trigger condition to a mobile station via a broadcast message, the signaled carrier number (Carrier_Number_N) value is not applied irrespective of the number of the currently active carriers of the mobile station but the mobile station is enabled to apply a trigger function using a smaller one of two variables. For instance, if the carrier number N signaled via the AAI-MC-ADV message is 3 and the number of the currently active carriers of the mobile station is 2, the mobile station sets the carrier number as the trigger condition corresponding to the trigger function 0x7 to the smaller one `2' of `3' and `2'. On the contrary, if the number of active carriers is 3 and the signaled Carrier_Number_N value is 2, the mobile station uses the carrier number 2 as the trigger condition corresponding to the trigger function 0x7. Hence, in this case, if the channel state for 2 carriers of a neighbor base station is equal to or greater than a predetermined value, the mobile station sends a scan report message to the base station.

In the following description, the trigger function 0x7 is explained with reference to Table 3. Table 3 shows one example of the definitions of trigger type, function and trigger action. The information shown in Table 3 may be included in Type/Function/Action field of a neighbor advertisement message.

**[Table 3]**

| Name | Size (Bit) | Value | Description |
|---|---|---|---|
| Type | 3 (MSB) | Trigger metric type: | |
| | | 0x0: CINR | |
| | | 0x1: RSSI | |
| | | 0x2: RTD | |
| | | 0x3: Number of consecutive P-SFHs missed | |
| | | 0x4: RD | |
| | | 0x5-0x7: reserved | |
| Function | 3 | Computation defining | NOTE-0x1-0x4 not applicable for RTD trigger metric When type 0x1 is used together with function 0x3 or 0x4, the threshold value shall range from -32 dB (0x80) to +31.75 dB (0x7F). When type 0x1 is used together with function 0x1, 0x2, 0x5, 0x6, or 0x7, the threshold value shall be interpreted as an unsigned byte with units of 0.25 dB, such that 0x00 is interpreted as -103.75 dBm and 0xFF is interpreted as -40 dBm Type 0x3 can only be used together with function 0x5 or function 0x6 Function 0x7 can only be used with Action 0x1 and/or 0x2 and applicable for AMS in CA mode. Non-CA mode AMS shall ignore this trigger. |
| | | trigger condition: | |
| | | 0x0: Reserved | |
| | | 0x1: Metric of neighbor | |
| | | ABS is greater than absolute value | |
| | | 0x2: Metric of neighbor | |
| | | ABS is less than absolute value | |
| | | 0x3: Metric of neighbor | |
| | | ABS is greater than serving ABS metric by relative value | |
| | | 0x4: Metric of neighbor | |
| | | ABS is less than serving | |
| | | ABS metric by relative value | |
| | | 0x5: Metric of serving | |
| | | ABS greater than absolute value | |
| | | 0x6: Metric of serving ABS less than absolute value | |
| | | 0x7: (For Multicarrier scenario only): | |
| | | Number of neighbor ABS's carriers (whose CINR/RSSI is greater than absolute value) is higher than threshold value. The N number of carriers that should satisfy the absolute threshold value for this trigger condition is selected as the smaller value between the Carrier_Number_N sent within the AAI_NBR-ADV message and the number of the current Active Carrier of the AMS. | |
| Action | 3 (LSB) | Action performed upon reaching trigger condition: | Action 0x3 applies to only Function 0x5 and 0x6. Action 0x4: If this ABS is the serving ABS(meaning the AMS is unable to maintain communication with the ABS), AMS sends AAI_HO-IND with HO Event Code 0b010 to the serving ABS. If this ABS is a target ABS, the AMS needs not take immediate action when this trigger condition is met for a single ABS. The AMS shall act only when this condition is met for all target ABSs included in AAI-HO-CMD during HO execution. |
| | | 0x0: Reserved | |
| | | 0x1: Respond on trigger with AAI_SCN-REP | |
| | | 0x2: Respond on trigger with AAI_HO-REQ | |
| | | 0x3: Respond on trigger with AAI_SCN-REQ | |
| | | 0x4: Declare ABS unreachable | |
| | | 0x5: Cancel HO | |
| | | 0x6 and 0x7: Reserved | |

Referring to Table 3, '0x7' is newly defined as a trigger function. The trigger function 0x7 is the trigger function applicable in a multicarrier environment only. If a signal quality (e.g., CINR/RSSI value) of N carriers among carriers of a neighbor base station supportive of multiple carriers is equal to greater than a predetermined value, a mobile station performs a specific trigger action. In Table 3, a trigger action 0x1 (can report message transmission) and/or a trigger action 0x2 (handover trigger) is set to be performed.

As mentioned in the foregoing description, if the N value is mobile station-specific, it may become the number of active carriers of a mobile station. If the N value is base station-specific, it may be signaled to a mobile station via a broadcast message. Moreover, in case that both of the active carrier number of the mobile station and the carrier number signaled via the broadcast message are taken into consideration, a smaller one of the two numbers can be selected.

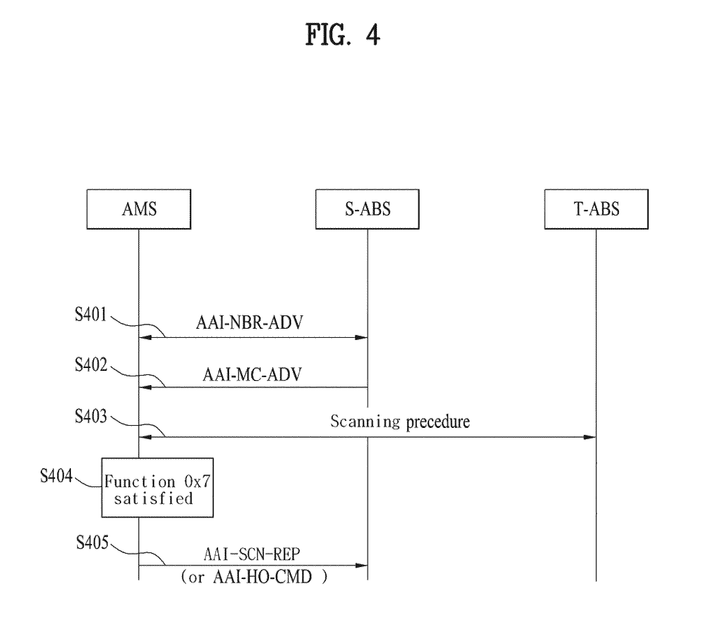

In the following description, the above-mentioned scan reporting and/or handover triggering procedure is explained with reference to FIG. 4.

FIG. 4 is a diagram for one example of a trigger procedure for a scan report message in a multicarrier environment according to one embodiment of the present invention.

In FIG. 4, assume a case that a base station specific multicarrier trigger (ABS-specific MC trigger) is applied and that a communication with a serving base station is performed in CA mode.

Referring to FIG. 4, a mobile station receives a neighbor advertisement message and a multicarrier advertisement message from a serving base station and is then able to obtain system information of a neighbor base station and multicarrier configuration information of the serving base station from the received messages [S401, S402].

In doing so, the mobile station many be able to obtain information on the carrier number N for the trigger function 0x7 in accordance with a base station specific multicarrier trigger (ABS-specific MC trigger) via the neighbor advertisement message or the multicarrier advertisement message.

Subsequently, the mobile station performs a scanning on carriers of the neighbor base station using the obtained information. In doing so, the mobile station may perform the scanning in a manner of sending a scanning request message to the serving base station and then receiving assignment of a scanning interval or may perform the scanning using a specific interval of an idle or sleep mode.

The mobile station determines whether the condition of the trigger function 0x7 is met in accordance with the result of the scanning, i.e., whether the number of the carriers of the neighbor base station, of which signal quality is equal to or higher than a predetermined reference, is equal to or greater than N [S404].

As a result of the determination, if the condition is met, the mobile station may be able to send a scan report message including the result of the scanning to the serving base station by a trigger action defined in case of meeting the trigger function 0x7 [S405]. In doing so, if a handover trigger is included as an action for the trigger function 0x7, the mobile station may be able to send a handover request (AAI-HO-REQ) message to the serving base station.

As mentioned in the above description, the present invention defines the trigger function 0x7 and announces the carrier number N, which is to be applied to the trigger function 0x7, via a broadcast message or enables an active carrier of a mobile station to be applied. Therefore, the present invention prevents a scan report message from being sent unnecessarily and defines scanning and handover trigger conditions in a multicarrier environment more efficiently.

**Structures of Mobile station And Base Station**

In the following description, a mobile station and a base station (FBS, MBS), to which the above-described embodiments of the present invention are applicable, according to another embodiment of the present invention are explained.

First of all, a mobile station works as a transmitter in uplink and is able to work as a receiver in downlink. A base station works as a receiver in uplink and is able to work as a transmitter in downlink. In particular, each of the mobile station and the base station includes a transmitter and a receiver for transmission of information and/or data.

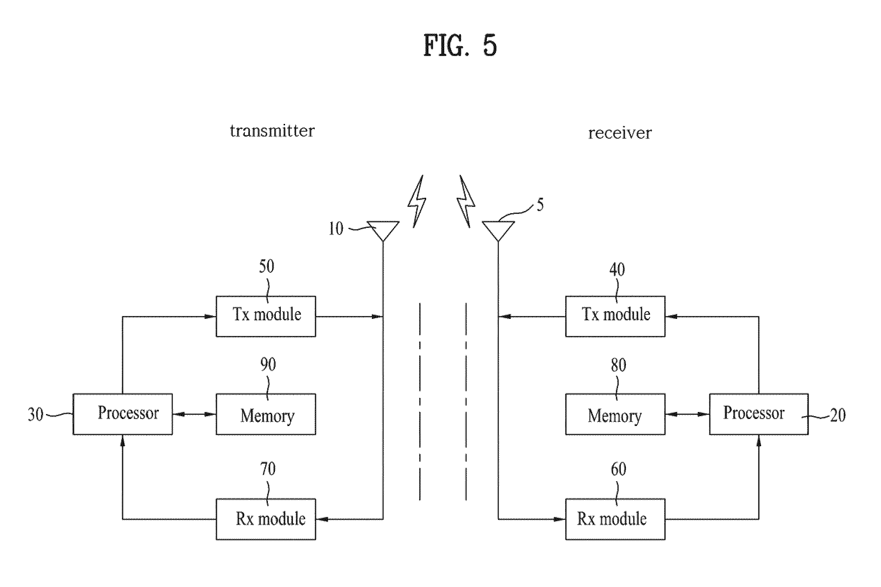

Each of the transmitter and the receiver can include a processor, a module, a part and/pr a means for performing embodiments of the present invention. In particular, each of the transmitter and the receiver can include a module (means) for encrypting a message, a module for interpreting the encrypted message, an antenna for transceiving the message and the like. Examples of the transmitting and receiving sides are described with reference to FIG. 5 as follows.

FIG. 5 is a block diagram for one example of structures of transmitting and receiving sides according to another embodiment of the present invention.

Referring to FIG. 5, a left part of the drawing shows a structure of a transmitting side and a right part of the drawing shows a structure of a receiving side. The transmitting/receiving side may include an antenna 5/10, a processor 20/30, a transmitting (Tx) module 40/50, a receiving (Rx) module 60/70 and a memory 80/90. And, the respective components may be able to perform functions corresponding to each other. The respective components are described in detail as follows.

The antenna 5/10 performs a function of externally transmitting a signal generated from the transmitting module 40/50 or a function of receiving a radio signal from outside and then delivering the received radio signal to the receiving module 60/70. In case that a multiple-antenna (MIMO) function is supported, at least two antennas can be provided to the mobile station or the base station.

The antenna, the transmitting module and the receiving module may be integrated into a radio frequency (RF) module.

The processor 20/30 generally controls overall operations of a mobile/base station. In particular, the processor 20/30 is able to perform a control function for performing the above-described embodiments of the present invention, a MAC (medium access control) frame variable control function according to service characteristics and propagation environment, a handover function, an authentication function, an encryption function and the like. In more particular, the processor 20/30 can further perform overall controls for the carrier configuration information obtaining/updating procedure.

Particularly, the processor of the mobile station may obtain information on the carrier number of a neighbor base station, which becomes a condition for determining whether a trigger condition of a trigger function 0x7 is met in a multicarrier environment, via a broadcast message or may analogize the information as the number of active carriers of its own. If the trigger condition is met, the processor of the mobile station may perform an operation defined in a trigger action.

Besides, the processor of the mobile station may be able to perform overall control operations of the operating process disclosed in the above-mentioned embodiments.

The transmitting module 40/50 performs prescribed coding and modulation on a data, which is scheduled by the processor and will be then transmitted externally, and is then able to deliver the coded and modulated data to the antenna 50/10.

The receiving module 60/70 reconstructs the radio signal received externally via the antenna 1000/1010 into original data in a manner of performing decoding and demodulation on the radio signal received via the antenna 5/10 and is then able to deliver the reconstructed original data to the processor 20/30.

The memory 80/90 can store programs for processing and control of the processor 20/30 and is able to perform a function of temporarily storing input/output data. And, the memory 80/90 can include at least one of storage media including a flash memory, a hard disk, a multimedia card micro type memory, a memory card type memory (e.g., SD memory, XD memory, etc.), a RAM (random access memory), an SRAM (static random access memory), a ROM (read-only memory), an EEPROM (electrically erasable programmable read-only memory), a PROM (programmable read-only memory), a magnetic memory, a magnetic disk, an optical disk and the like.

Meanwhile, the base station may perform a controller function for performing the above-described embodiments of the present invention, an OFDMA (orthogonal frequency division multiple access) packet scheduling, TDD (time division duplex) packet scheduling and channel multiplexing function, a MAC (medium access control) frame variable control function according to a service characteristic and electric wave environment, a fast traffic real-time control function, a handover function, an authentication and encryption function, a packet modulation/demodulation function for data transmission, a fast packet channel coding function, a real-time modem control function, and the like using at least one of the modules mentioned in the foregoing description and may further include means, modules, parts and/or the like to perform these functions.

While the present invention has been described and illustrated herein with reference to the preferred embodiments thereof, it will be apparent to those skilled in the art that various modifications and variations can be made therein without departing from the spirit and scope of the invention. Thus, it is intended that the present invention covers the modifications and variations of this invention that come within the scope of the appended claims and their equivalents. And, it is apparently understandable that an embodiment is configured by combining claims failing to have relation of explicit citation in the appended claims together or can be included as new claims by amendment after filing an application.

### INDUSTRIAL APPLICABILITY

Accordingly, a more efficient multicarrier scanning/handover trigger procedure in a broadband wireless access system and mobile station structure for the same are mainly described by taking one example applied to IEEE 802.16m system and may be further applicable to various kinds of mobile communication systems including 3GPP/3GPP2 and the like as well as IEEE 802.xx systems.

## Claims

1. An operating method of a mobile station, which operates in a carrier aggregation mode in a multicarrier supportive broadband wireless access system, comprising the steps of:
obtaining system information of a neighbor base station and trigger function information applied to the carrier aggregation mode via a 1^{st} broadcast message broadcasted by a serving base station;
scanning a channel state for at least one carrier of the neighbor base station supportive of multiple carriers using the obtained system information; and
sending a 2^{nd} message to the serving base station if a result of the scanning step meets a condition in accordance with the trigger function information.

2. The method of claim 1, wherein the condition in accordance with the trigger function information is met if the number of carriers, each having a channel state equal to or greater than a predetermined value, among the scanned at least one carrier is equal to or greater than N.

3. The method of claim 2, wherein the N value is included in the 1^{st} broadcast message for each of the at least one neighbor base station or a 3^{rd} message including a multicarrier information of the serving base station.

4. The method of claim 2, wherein the N value comprises the number of currently active carriers of the mobile station.

5. The method of claim 2, wherein the 2^{nd} message comprises a scan report (AAI-SCN-RSP) message and a handover request (AAI-HO-REQ) message.

6. A method of supporting a mobile station, which operates in a carrier aggregation mode and is supported by a serving station supportive of multiple carriers in a multicarrier supportive broadband wireless access system, comprising the steps of:
broadcasting a 1^{st} broadcast message including system information of at least one neighbor base station and trigger function information applied to the carrier aggregation mode; and
receiving a 2^{nd} message including a channel state information on a plurality of carriers supported by at least one of the at least one neighbor base station from the mobile station.

7. The method of claim 6, wherein the mobile station performs a scan on a specific base station among the at least one neighbor base station and wherein if the number of carriers having a channel state equal to or greater than a predetermined value among a plurality of carriers supported by the specific base station is equal to or greater than N, the mobile station sends the 2^{nd} message to the serving base station.

8. The method of claim 7, wherein the N value is included in the 1^{st} broadcast message per the neighbor base station or a 3^{rd} message including a multicarrier information of the serving base station.

9. The method of claim 7, wherein the N value comprises the number of currently active carriers of the mobile station.

10. The method of claim 6, wherein the 1^{st} broadcast message comprises a neighbor advertisement (AAI-NBR-ADV) message and wherein the 2^{nd} broadcast message comprises a scan report (AAI-SCN-RSP) message.

11. A mobile station, which operates in a carrier aggregation mode in a multicarrier supportive broadband wireless access system, comprising:
a processor; and
a radio communication (RF) module configured to transceive radio signals externally under a control of the processor,
wherein the processor obtains a system information of a neighbor base station and a trigger function information applied to the carrier aggregation mode via a 1^{st} broadcast message broadcasted by a serving base station, wherein the processor performs a scanning on a channel state for at least one carrier of the neighbor base station supportive of multiple carriers using the obtained system information, and wherein the processor controls a 2^{nd} message to be sent to the serving base station if a result of the scanning meets a condition in accordance with the trigger function information.

12. The mobile station of claim 11, wherein the processor determines that the condition in accordance with the trigger function information is met if the number of carriers, each having a channel state equal to or greater than a predetermined value, among the scanned at least one carrier is equal to or greater than N.

13. The mobile station of claim 12, wherein the N value is included in the 1^{st} broadcast message for each of the at least one neighbor base station or a 3^{rd} message including a multicarrier information of the serving base station.

14. The mobile station of claim 12, wherein the N value comprises the number of currently active carriers of the mobile station.

15. The mobile station of claim 12, wherein the 2^{nd} message comprises a scan report (AAI-SCN-RSP) message and a handover request (AAI-HO-REQ) message.
